(19) **Europäisches Patentamt**
**European Patent Office**
**Office européen des brevets**

(11) **EP 2 330 582 A1**

(12) **EUROPEAN PATENT APPLICATION**
published in accordance with Art. 153(4) EPC

(43) Date of publication:
**08.06.2011 Bulletin 2011/23**

(51) Int Cl.:
*G08G 1/16* (2006.01)        *G06T 1/00* (2006.01)
*G06T 7/20* (2006.01)        *G08B 21/06* (2006.01)

(21) Application number: **09813068.5**

(22) Date of filing: **08.09.2009**

(86) International application number:
**PCT/JP2009/065685**

(87) International publication number:
**WO 2010/029922 (18.03.2010 Gazette 2010/11)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **12.09.2008 JP 2008234543**

(71) Applicant: **Aisin Seiki Kabushiki Kaisha Kariya-shi, Aichi 448-8650 (JP)**

(72) Inventors:
• **TERASHIMA, Ryuta**
  **Aichi-gun**
  **Aichi 480-1192 (JP)**
• **YODA, Takumi**
  **Aichi-gun**
  **Aichi 480-1192 (JP)**

• **WAKITA, Toshihiro**
  **Aichi-gun**
  **Aichi 480-1192 (JP)**
• **TSUDA, Taishi**
  **Toyota-shi**
  **Aichi 471-8571 (JP)**
• **OMI, Takuhiro**
  **Kariya-shi**
  **Aichi 448-8666 (JP)**
• **NAGAI, Fumiya**
  **Kariya-shi**
  **Aichi 448-8666 (JP)**

(74) Representative: **TBK**
  **Bavariaring 4-6**
  **80336 München (DE)**

(54) **OPEN/CLOSED-EYE JUDGMENT DEVICE, DEVICE FOR ESTIMATING DEGREE OF EYE OPENNESS, AND PROGRAM**

(57) An open-eye or closed-eye determination apparatus is provided with: an image capture section 11 for capturing an image of a region including the eye of an investigation subject; a width of eye opening measurement section 12 for detecting top and bottom eyelids of an investigation subject from the image captured by the image capture section 11 and measuring the width of eye opening between the edges of the top and bottom eyelids; a filter section 13 for subjecting the width of eye opening measured by the width of eye opening measurement section 12 to filter processing; and an open-eye or closed-eye determination section 14 for determining closed-eye when a value of the width of eye opening obtained by the filter section 13 minus the width of eye opening measured by width of eye opening measurement means is greater than a threshold value, and determining open-eye when this difference is a threshold value or less. According to this open-eye or closed-eye determination apparatus, open-eye or closed-eye determination can be made with good precision, without being influenced by image capture conditions and distance to the face.

**(Cont. next page)**

# FIG.1

```
   11              12                14                15
   IMAGE        WIDTH OF EYE      OPEN-EYE OR       DEGREE OF EYE
   CAPTURE  →   OPENING       →   CLOSED-EYE    →   OPENNESS
   SECTION      MEASUREMENT       DETERMINATION     ESTIMATION
                SECTION           SECTION           SECTION
                    ↓                                   ↓
                 FILTER                       16~  NODDING-OFF
                 SECTION                           DETERMINATION
                                                   SECTION
                    13                                 ↓
                                             17~    WARNING
                                                    SECTION
```

**Description**

Technical Field

The present invention relates to an open-eye or closed-eye determination apparatus, a degree of eye openness estimation apparatus and program, for application such as to a nodding-off warning device that estimates the state of alertness of a driver and generates a warning as required or the like.

Background Art

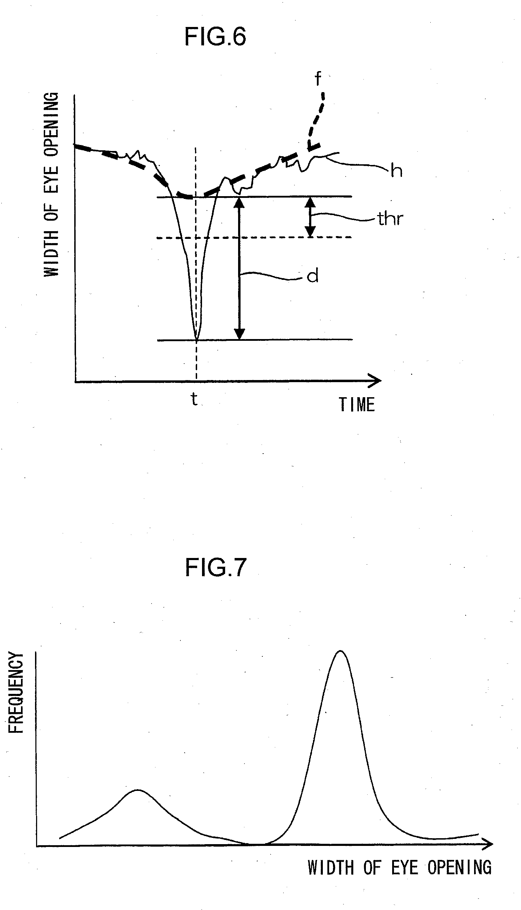

In order to improve safety of vehicles and the like, nodding-off detection devices are proposed for generating a warning when a nodding-off state of a driver is detected. As such devices, for example, an open-eye or closed-eye monitoring apparatus is described that computes the position of top and bottom eyelids in image data captured of the face of a driver, and calculates a degree of eye openness and a threshold value for open-eye or closed-eye based on these values (see, for example, Japanese Patent Application Laid-Open (JP-A) No. 2004-41485). Specifically, local minima values of openness are calculated from degree of eye openness time series data, these values are re-ordered in magnitude sequence, then the point at which the difference becomes the greatest between the time series is used as a reference for discriminating between a group of open-eye candidates and a group of closed-eye candidates. Open-eye or closed-eye is calculated by determining threshold values for open-eye and closed-eye based on the standard deviation values obtained for each of the groups. Appropriate operation is achieved by such an open-eye or closed-eye monitoring apparatus as long as the local minima values do not vary too greatly. This is because appropriate threshold values for open-eye and closed-eye can be set when the frequency distribution of width of eye opening approximates to a distribution with two peaks, as shown in Fig. 7.

DISCLOSURE OF THE INVENTION

Technical Problem

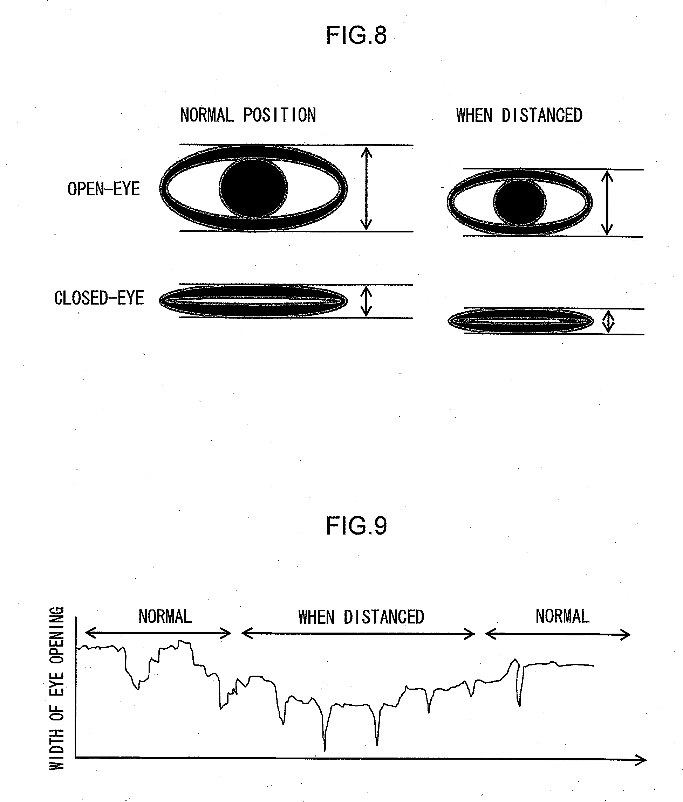

Width of eye opening is calculated by detecting edges of an image of the back of the eye obtained from an image recognition device, and calculated from top and bottom end points thereof. However, when the position of the face becomes distanced from the camera due to changes in driver position or the like, as shown in Fig. 8, the width of eye opening is computed smaller. Furthermore, in the open-eye or closed-eye monitoring apparatus of JP-A No. 2004-41485, in cases where the width of eye opening of closed-eye during normal time becomes the same as the width of eye opening of open-eye when the face is distanced, the frequency distribution of the width of eye opening does is not a two peaks distribution. This is a phenomenon that occurs due to distributions being defined in terms of absolute values of width of eye opening, and an issue arises of inappropriate operation when the value of a standard (distance to face) changes.

The present invention is made to address the above issue, and an object is to provide an open-eye or closed-eye determination apparatus, a degree of eye openness estimation apparatus and a program that determine open-eye or closed-eye with good precision, without influence from the image capture conditions or the distance to the face.

Solution to Problem

In order to achieve the above object, an open-eye or closed-eye determination apparatus of claim 1 includes: an image capture means for capturing an image of a region including an eye of an investigation subject; a width of eye opening measurement means for detecting top and bottom eyelids of the investigation subject from the image captured by the image capture means and measuring the width of eye opening between the edges of the top and bottom eyelids; a filter means for subjecting the width of eye opening measured by the width of eye opening measurement means to filter processing; and an open-eye or closed-eye determination means for determining closed-eye when a value of the width of eye opening obtained by the filter means minus the width of eye opening measured by width of eye opening measurement means is greater than a threshold value, and determining open-eye when this difference is a threshold value or less.

According to the invention of claim 1, open-eye or closed-eye can be determined with good precision, without influence from the image capture conditions, movement of the face of the investigation subject, or the like.

An open-eye or closed-eye determination apparatus of claim 2 is the open-eye or closed-eye determination apparatus of claim 1, wherein the filter means is a low pass filter that allows passage of data with lower frequency than the frequency of blinking.

According to the invention of claim 2, changes in width of eye opening due to the investigation subject blinking are removed, and open-eye or closed-eye can be determined with good precision based on changes in width of eye opening due to movement of the face from sleepiness or the like.

A degree of eye openness estimation apparatus of claim 3 includes: the open-eye or closed-eye determination apparatus of claim 1 or claim 2; a threshold value computation means that computes a closed-eye threshold value based on the width of eye opening measured by the width of eye opening measurement means when closed-eye has been determined by the open-eye or closed-eye determination means, and computes an open-eye threshold value based on the width of eye opening obtained by the filter means when open-eye has been determined by the open-eye or closed-eye determination means; and a degree of eye openness estimation means for computing a degree of eye openness estimated value based on the closed-eye threshold value, the open-eye threshold value, and the width of eye opening measured by the width of eye opening measurement means or the width of eye opening obtained by the filter means.

According to the invention of claim 3, degree of eye openness can be estimated based on the determined open-eye or closed-eye, without influence from image capture conditions, movement of the face of the investigation subject or the like.

The degree of eye openness estimation apparatus of claim 4 is the degree of eye openness estimation apparatus of claim 3, wherein the degree of eye openness estimated value is a value of the width of eye opening measured by the width of eye opening measurement means or the width of eye opening obtained by the filter means minus the closed-eye threshold value, divided by the value of the open-eye threshold value minus the closed-eye threshold value.

The degree of eye openness estimation apparatus of claim 5 is the degree of eye openness estimation apparatus of claim 4, wherein: the closed-eye threshold value is computed based on the widths of eye opening accumulated when closed-eye has been determined up until the point in time the degree of eye openness estimated value is derived; and the open-eye threshold value is computed based on the widths of eye opening accumulated when open-eye has been determined up until the point in time the degree of eye openness estimated value is derived.

The degree of eye openness estimation apparatus of claim 6 is the degree of eye openness estimation apparatus of any one of claim 3 to claim 5, further including a warning means that issues a warning to a driver based on the degree of eye openness estimated value.

A program of claim 7 is a program causing a computer to function as: a width of eye opening measurement means for detecting top and bottom eyelids of an investigation subject from an image captured by image capture means of a region including an eye of the investigation subject and measuring the width of eye opening between the edges of the top and bottom eyelids; a filter means for subjecting the width of eye opening measured by the width of eye opening measurement means to filter processing; and an open-eye or closed-eye determination means for determining closed-eye when a value of the width of eye opening obtained by the filter means minus the width of eye opening measured by width of eye opening measurement means is greater than a threshold value, and determining open-eye when this difference is a threshold value or less.

Advantageous Effects of the Invention

As explained above, according to the present invention, open-eye or closed-eye can be determined with good precision, without influence from image capture conditions and distance to the face, and a degree of eye openness can also be estimated based on the open-eye or closed-eye determination result.

BRIEF DESCRIPTION OF THE DRAWINGS

Fig. 1 is a block diagram showing main configuration parts of a nodding-off warning device according to a present exemplary embodiment.
Fig. 2 is a diagram showing measured values of width of eye opening and output values of a filter.
Fig. 3 is a diagram showing characteristics of a low pass filter.
Fig. 4 is a flow chart showing operational flow of a nodding-off warning device according to the present exemplary embodiment.
Fig. 5 is a flow chart showing flow of degree of eye openness estimation processing.
Fig. 6 is diagram showing an open-eye or closed-eye determination method.
Fig. 7 is diagram showing a width of eye opening distribution.
Fig. 8 is a diagram showing width of eye opening depending on position of face.
Fig. 9 is a diagram showing changes in a width of eye opening time series with face position.

BEST MODE FOR CARRYING OUT THE INVENTION

Detailed explanation follows regarding an exemplary embodiment of the present invention, with reference to the drawings. The present exemplary embodiment illustrates an exemplary embodiment for a case in which an open-eye or closed-eye determination apparatus and a degree of eye openness estimation apparatus according to the present invention are utilized in a driver nodding-off warning device.

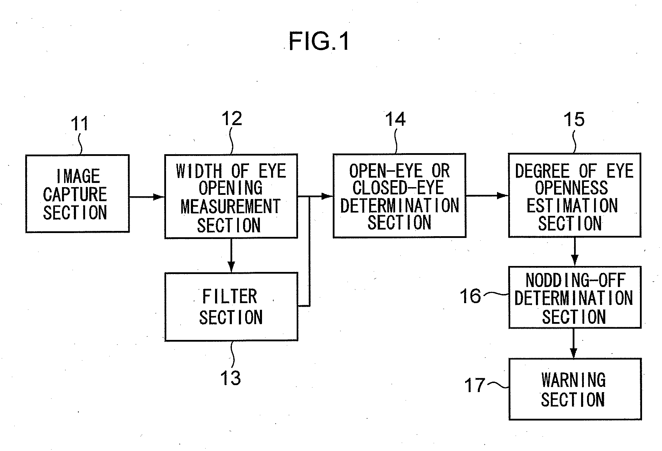

Fig. 1 is a block diagram illustrating main configuration parts of a nodding-off warning device according to the present exemplary embodiment. As shown in Fig. 1, the nodding-off warning device includes an image capture section 11, a width of eye opening measurement section 12, a filter section 13, an open-eye or closed-eye determination section 14, a degree of eye openness estimation section 15, a nodding-off determination section 16 and a warning section 17.

The image capture section 11 is configured with a CCD camera or the like, placed to enable image capture of a driver from substantially face-on. The image capture section 11 captures an image of a region including at least an eye of a driver.

The width of eye opening measurement section 12 detects the top and bottom eyelids of a driver in the camera image captured by the image capture section 11, and measures the width of eye opening of the driver based on the number of pixels between the edges of the two eyelids.

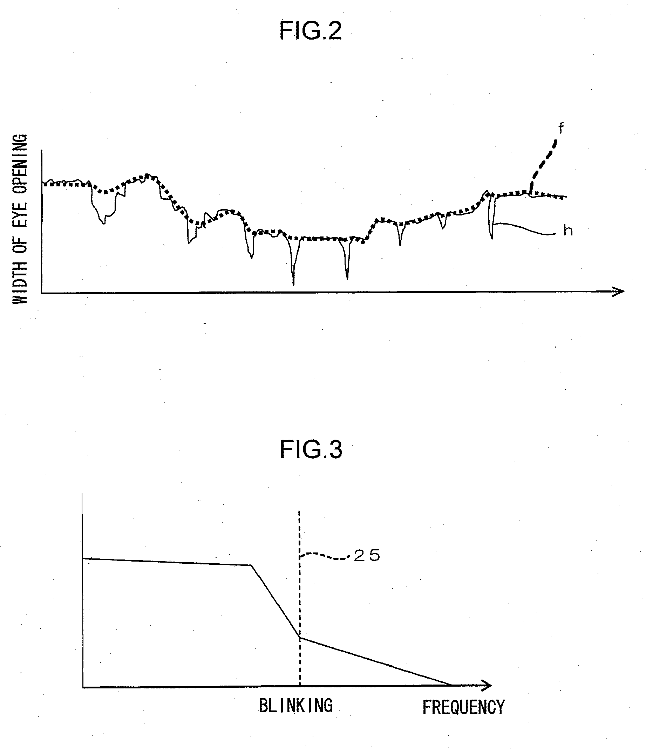

The filter section 13 follows the trend in the time series of the width of eye opening measured by width of eye opening calculation means. Fig. 2 illustrates an example of output from the filter section 13. Values shown by the solid line h are actual measurement values by the width of eye opening measurement section 12, and values shown by the broken line f are output values by the filter section 13. In the present exemplary embodiment, a low pass filter is employed as the filter section 13. The filter characteristics of the low pass filter are set, as shown in Fig. 3, such that only signals of lower frequency than blinking frequency 25 pass through. Accordingly, normal blinking is prevented from being determined as closed-eye.

The open-eye or closed-eye determination section 14 determines open-eye or closed-eye based on the difference between the width of eye opening obtained by the filter section 13 and the width of eye opening measured by the width of eye opening measurement section 12. The open-eye or closed-eye determination section 14 contains an internal open-eye buffer and closed-eye buffer (neither shown in the drawings). The width of eye opening is stored in the open-eye buffer when open-eye is determined, and the width of eye opening is stored in closed-eye buffer for when closed-eye is determined.

The degree of eye openness estimation section 15 computes a closed-eye threshold value based on the measured width of eye opening by the widths of eye opening measurement section 12 when closed-eye is determined, and computes an open-eye threshold value based on the widths of eye opening obtained by the filter section 13 when open-eye is determined. A degree of eye openness estimated value is then computed based on the closed-eye threshold value, the open-eye threshold value, and the width of eye opening measured by the width of eye opening measurement section 12 or the width of eye opening obtained by the filter section 13. The degree of eye openness estimation section 14 contains a degree of eye openness buffer (not shown in the drawings) for storing the computed degree of eye openness estimated values.

The nodding-off determination section 16 computes the proportion of open-eye per unit time from the degree of eye openness stored in the degree of eye openness buffer, and determines whether or not the driver is in a nodding-off state by comparing the computed proportion of open-eye with a threshold value.

When a nodding-off state has been determined to exist by the nodding-off determination section 16, the warning section 17 prompts to driver to pay attention by issuing a warning noise or command, and/or outputting characters or the like to a display device (not shown in the drawings).

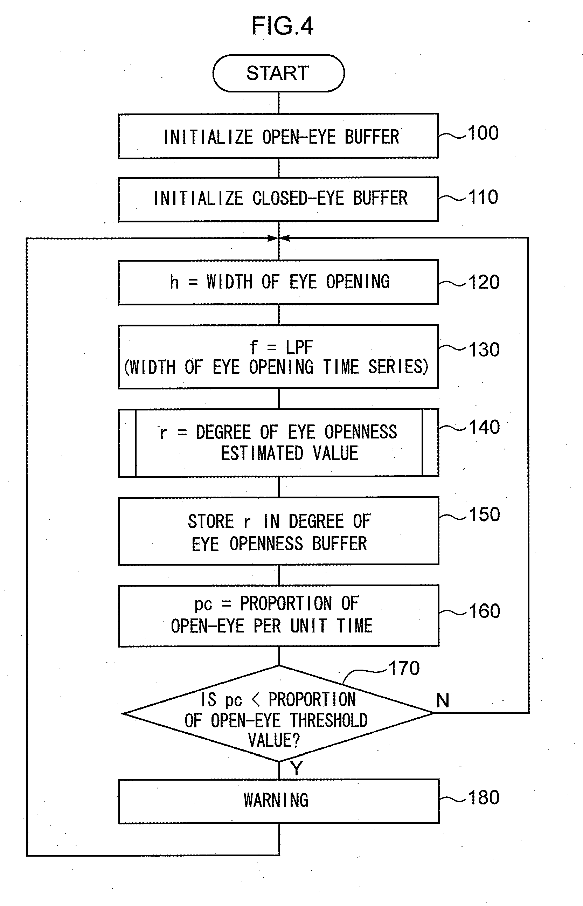

Explanation now follows regarding an operational flow of a nodding-off warning device in the present exemplary embodiment, with reference to the flow chart shown in Fig. 4.

First, at step 100 and step 110, the open-eye or closed-eye determination section 14 initializes the open-eye buffer and the closed-eye buffer. Both of these buffers are First In First Out (FIFO) buffers, and the widths of eye opening during open-eye and during closed-eye are placed in the respective buffers in initializing processing.

At step 120, the width of eye opening measurement section 12 measures the width of eye opening of the driver from image recognition results of a camera image captured by the image capture section 11, and substitutes the measured width of eye opening as a variable h.

At step 130, the filter section 13 substitutes as variable f a value at the time corresponding to the variable h from the values obtained by passing the time series data of the measured width of eye opening through low pass filtering (LPF).

At step 140, the degree of eye openness estimation section 15 computes an estimated value of degree of eye openness from the above variable h and variable f, and substitutes this value as a variable r. The computation method for the degree of eye openness estimated value is described later.

At step 150, the degree of eye openness estimation section 15 stores the variable r in the degree of eye openness buffer. The degree of eye openness buffer is a FIFO buffer storing a unit of time's worth of r.

At step 160, the degree of eye openness estimation section 15 computes the proportion of open-eye per unit time based on the values of r stored in the degree of eye openness buffer, and substitutes this value as the variable pc. Since a unit of time's worth of r is stored in the degree of eye openness buffer, the proportion of open-eye per unit of time is derived by summation of all of the stored values.

At step 170, the nodding-off determination section 16 compares the proportion of open-eye pc per unit of time with a predetermined threshold value. When the pc is the threshold value or greater, determination is made that a nodding-off state does not exist, and processing returns to step 120, where the processing from step 120 onwards is repeated. However, a nodding-off state is determined when pc is smaller than the threshold value, and processing proceeds to step 180.

At step 180, the warning section 17 issues a warning to the driver prompting the driver to take a wake-up break by use of a warning noise, command or the like. Processing then returns to step 120, and the processing of step 120 onwards is repeated.

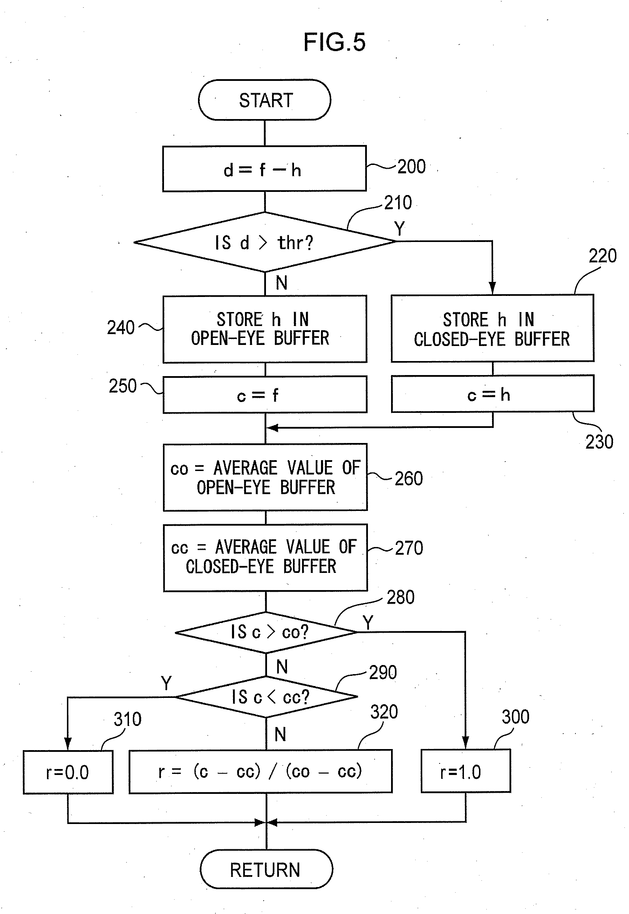

Explanation now follows regarding the computation method of the degree of eye openness estimated value at step 140, with reference to the flow chart shown in Fig. 5.

First, at step 200 and step 210, the open-eye or closed-eye determination section 14 determines whether or not an open-eye state exists at each time. Fig. 9 shows this open-shut eye determination method.

At step 200, the open-eye or closed-eye determination section 14 calculates a value by subtracting h, the measured value by the width of eye opening measurement section 12, from f, the output value of the filter section 13 at the time t where open-eye or closed-eye determination is to be made, and substitutes this value as the variable d.

At step 210, the open-eye or closed-eye determination section 14 compares the variable d with a predetermined threshold value thr, and determines that a closed-eye state exists when d is greater than thr, with processing then proceeding to step 220. However, determination is that an open-eye state exists when d is the thr or less, with processing then proceeding to step 240.

When closed-eye is determined, the open-eye or closed-eye determination section 14 stores h in the closed-eye buffer at step 220, and the measured value h by the width of eye opening measurement section 12 is substituted as the variable c at step 230.

When open-eye is determined, the open-eye or closed-eye determination section 14 stores h in the open-eye buffer at step 240, and the output value f of the filter section 13 is substituted as the variable c at step 250.

At step 260, the degree of eye openness estimation section 15 derives the average value of the values in the open-eye buffer and substitutes this value as the open-eye threshold value co. At step 270, the degree of eye openness estimation section 15 derives the average value of the values in the closed-eye threshold value and substitutes this value as the closed-eye threshold value cc. In the present exemplary embodiment, the average value of the width of eye opening stored in the open-eye buffer or the closed-eye buffer, respectively, up to the relevant point in time are employed as the open-eye threshold value and the closed-eye threshold value, however configuration may be made such that the width of eye opening h measured by the width of eye opening measurement section 12 at the relevant point in time is employed as the open-eye threshold value or closed-eye threshold value.

In step 280 and step 290, the degree of eye openness estimation section 15 compares the above c against the open-eye threshold value co and the closed-eye threshold value cc, respectively.

When, as a result, c is found to be greater than co, processing proceeds to step 300, and the degree of eye openness estimated value r is set as 1.0. When c is found to be less than cc, processing proceeds to step 310, and the degree of eye openness estimated value r is set as 0.0. When c is from cc to co, processing proceeds to step 320, and, according to Equation (1), a value of c minus the closed-eye threshold value cc, normalized by the difference between the open-eye threshold value co and the closed-eye threshold value, is taken as the degree of eye openness estimated value r.

$$r = (c - cc) / (co - cc) \qquad \text{Equation (1)}$$

Accordingly, after driving the degree of eye openness estimated value r at the relevant point in time, processing returns to the flow of Fig. 4, and the processing from step 150 onwards is performed.

As described above, in the present exemplary embodiment, open-eye or closed-eye can be determined with good precision, without influence from image capture conditions and the distance to the face. Furthermore, determination can be made as to whether or not the driver is in a nodding-off state based on the proportion of open-eye per unit time, and appropriate prompting to pay attention can be issued to the driver when a nodding-off state exists.

Note that the present invention is not limited to the above exemplary embodiments, and design modifications can be applied within a scope of the recited scope of the patent claims.

The program according to the present invention can be supplied stored on a storage medium, such as a CD-ROM, or the like.

Explanation of the Reference Numerals

11    image capture section
12    width of eye opening measurement section
13    filter section
14    open-eye or closed-eye determination section
15    degree of eye openness estimation section
16    nodding-off determination section
17    warning section

**Claims**

1.  An open-eye or closed-eye determination apparatus comprising:

    an image capture means for capturing an image of a region including an eye of an investigation subject;
    a width of eye opening measurement means for detecting top and bottom eyelids of the investigation subject from the image captured by the image capture means and measuring the width of eye opening between the edges of the top and bottom eyelids;
    a filter means for subjecting the width of eye opening measured by the width of eye opening measurement means to filter processing; and
    an open-eye or closed-eye determination means for determining closed-eye when a value of the width of eye opening obtained by the filter means minus the width of eye opening measured by width of eye opening measurement means is greater than a threshold value, and determining open-eye when this difference is a threshold value or less.

2.  The open-eye or closed-eye determination apparatus of claim 1, wherein the filter means comprises a low pass filter that allows passage of data with lower frequency than the frequency of blinking.

3.  An degree of eye openness estimation apparatus comprising:

    the open-eye or closed-eye determination apparatus of claim 1 or claim 2;
    a threshold value computation means that computes a closed-eye threshold value based on the width of eye opening measured by the width of eye opening measurement means when closed-eye has been determined by the open-eye or closed-eye determination means, and computes an open-eye threshold value based on the width of eye opening obtained by the filter means when open-eye has been determined by the open-eye or closed-eye determination means; and
    a degree of eye openness estimation means for computing a degree of eye openness estimated value based on the closed-eye threshold value, the open-eye threshold value, and the width of eye opening measured by the width of eye opening measurement means or the width of eye opening obtained by the filter means.

4.  The degree of eye openness estimation apparatus of claim 3, wherein the degree of eye openness estimated value is a value of the width of eye opening measured by the width of eye opening measurement means or the width of eye opening obtained by the filter means minus the closed-eye threshold value, divided by the value of the open-eye threshold value minus the closed-eye threshold value.

5.  The degree of eye openness estimation apparatus of claim 4, wherein:

    the closed-eye threshold value is computed based on the widths of eye opening accumulated when closed-eye has been determined up until the point in time the degree of eye openness estimated value is derived; and
    the open-eye threshold value is computed based on the widths of eye opening accumulated when open-eye has been determined up until the point in time the degree of eye openness estimated value is derived.

6.  The degree of eye openness estimation apparatus of any one of claim 3 to claim 5, further comprising a warning means that issues a warning to a driver based on the degree of eye openness estimated value.

7. A program for causing a computer to function as:

a width of eye opening measurement means for detecting top and bottom eyelids of an investigation subject from an image captured by image capture means of a region including an eye of the investigation subject and measuring the width of eye opening between the edges of the top and bottom eyelids;
a filter means for subjecting the width of eye opening measured by the width of eye opening measurement means to filter processing; and
an open-eye or closed-eye determination means for determining closed-eye when a value of the width of eye opening obtained by the filter means minus the width of eye opening measured by width of eye opening measurement means is greater than a threshold value, and determining open-eye when this difference is a threshold value or less.

FIG.1

```
   11                    12                    14                    15
    ┌──────────┐    ┌──────────────┐    ┌──────────────┐    ┌──────────────┐
    │  IMAGE   │    │ WIDTH OF EYE │    │ OPEN-EYE OR  │    │ DEGREE OF EYE│
    │ CAPTURE  │───▶│   OPENING    │───▶│ CLOSED-EYE   │───▶│   OPENNESS   │
    │ SECTION  │    │ MEASUREMENT  │    │DETERMINATION │    │ ESTIMATION   │
    └──────────┘    │   SECTION    │    │  SECTION     │    │  SECTION     │
                    └──────────────┘    └──────────────┘    └──────────────┘
                           │    │                                   │
                           ▼    │                                   ▼
                    ┌──────────────┐                         ┌──────────────┐
                    │   FILTER     │                         │ NODDING-OFF  │
                    │   SECTION    │                    16 ──│DETERMINATION │
                    └──────────────┘                         │  SECTION     │
                           │                                 └──────────────┘
                           ▼                                        │
                          13                                        ▼
                                                           ┌──────────────┐
                                                           │   WARNING    │
                                                      17 ──│   SECTION    │
                                                           └──────────────┘
```

# FIG.2

# FIG.3

# FIG.4

```
        ( START )
            │
┌───────────────────────────────────┐
│   INITIALIZE OPEN-EYE BUFFER       │──100
└───────────────────────────────────┘
            │
┌───────────────────────────────────┐
│   INITIALIZE CLOSED-EYE BUFFER     │──110
└───────────────────────────────────┘
            │
   ┌────────┴──────────────────────────────────┐
   │   ┌───────────────────────────────────┐    │
   │   │   h = WIDTH OF EYE OPENING         │──120
   │   └───────────────────────────────────┘    │
   │            │                                │
   │   ┌───────────────────────────────────┐    │
   │   │          f = LPF                   │──130
   │   │ (WIDTH OF EYE OPENING TIME SERIES) │    │
   │   └───────────────────────────────────┘    │
   │            │                                │
   │   ┌───────────────────────────────────┐    │
   │   │  r = DEGREE OF EYE OPENNESS        │──140
   │   │     ESTIMATED VALUE               │    │
   │   └───────────────────────────────────┘    │
   │            │                                │
   │   ┌───────────────────────────────────┐    │
   │   │   STORE r IN DEGREE OF             │──150
   │   │   EYE OPENNESS BUFFER             │    │
   │   └───────────────────────────────────┘    │
   │            │                                │
   │   ┌───────────────────────────────────┐    │
   │   │   pc = PROPORTION OF               │──160
   │   │  OPEN-EYE PER UNIT TIME           │    │
   │   └───────────────────────────────────┘    │
   │            │                          170    │
   │          ◇─┴────────────◇                   │
   │        IS pc < PROPORTION    N              │
   │        OF OPEN-EYE THRESHOLD ─────────────────┘
   │            VALUE?                            
   │            │ Y                              
   │   ┌───────────────────────────────────┐    
   │   │           WARNING                  │──180
   │   └───────────────────────────────────┘    
   │            │                                
   └────────────┘                                
```

# FIG.5

```
                    ┌─────────────┐
                    │    START    │
                    └──────┬──────┘
                           │
                    ┌──────┴──────┐
                    │  d = f − h  │───200
                    └──────┬──────┘
                           │
                      ╱────┴────╲        210
                    ╱  IS d > thr? ╲──────── Y ──────┐
                    ╲             ╱                   │
                      ╲────┬────╱                     │
                           │ N                        │       220
        240      ┌─────────┴─────────┐      ┌─────────┴─────────┐
        ─────────│    STORE h IN     │      │    STORE h IN     │
                 │  OPEN-EYE BUFFER  │      │ CLOSED-EYE BUFFER │
                 └─────────┬─────────┘      └─────────┬─────────┘
        250      ┌─────────┴─────────┐      ┌─────────┴─────────┐
        ─────────│      c = f        │      │      c = h        │
                 └─────────┬─────────┘      └─────────┬─────────┘
                           │                          230
                           │◄─────────────────────────┘
                 ┌─────────┴─────────┐
                 │ co = AVERAGE VALUE OF │──260
                 │  OPEN-EYE BUFFER  │
                 └─────────┬─────────┘
                 ┌─────────┴─────────┐
                 │ cc = AVERAGE VALUE OF │──270
                 │ CLOSED-EYE BUFFER │
                 └─────────┬─────────┘
                           │        280
                      ╱────┴────╲
                    ╱  IS c > co? ╲──── Y ──────────────┐
                    ╲             ╱                      │
                      ╲────┬────╱                        │
                           │ N        290                │
                      ╱────┴────╲                        │
              Y ────╱  IS c < cc? ╲                      │
              │      ╲             ╱ 320                  │
              │        ╲────┬────╱                        │
              │             │ N                           │
     310 ┌────┴───┐  ┌──────┴──────────────┐   300 ┌──────┴──────┐
         │ r=0.0  │  │ r = (c − cc)/(co − cc) │      │   r=1.0     │
         └────┬───┘  └──────┬──────────────┘        └──────┬──────┘
              │             │                              │
              └─────────────┼──────────────────────────────┘
                            │
                    ┌───────┴───────┐
                    │    RETURN     │
                    └───────────────┘
```

FIG.6

FIG.7

# FIG.8

| | NORMAL POSITION | WHEN DISTANCED |
|---|---|---|
| OPEN-EYE | | |
| CLOSED-EYE | | |

# FIG.9

WIDTH OF EYE OPENING

NORMAL — WHEN DISTANCED — NORMAL

| **INTERNATIONAL SEARCH REPORT** | | International application No. |
|---|---|---|
| | | PCT/JP2009/065685 |

A.   CLASSIFICATION OF SUBJECT MATTER
*G08G1/16*(2006.01)i, *G06T1/00*(2006.01)i, *G06T7/20*(2006.01)i, *G08B21/06*
(2006.01)i

According to International Patent Classification (IPC) or to both national classification and IPC

B.   FIELDS SEARCHED

Minimum documentation searched (classification system followed by classification symbols)
G08G1/16, G06T1/00, G06T7/20, G08B21/06

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y<br>A | JP 2004-192345 A  (Nissan Motor Co., Ltd.),<br>08 July 2004 (08.07.2004),<br>paragraphs [0015] to [0017], [0027], [0035] to<br>[0039]; fig. 8, 9<br>(Family: none) | 1,2,7<br>3-6 |
| Y<br>A | JP 11-66304 A  (Mitsubishi Electric Corp.),<br>09 March 1999 (09.03.1999),<br>paragraphs [0029] to [0033]; fig. 1, 2<br>(Family: none) | 1,2,7<br>3-6 |
| A | JP 7-181012 A  (Nissan Motor Co., Ltd.),<br>18 July 1995 (18.07.1995),<br>paragraphs [0009], [0019] to [0027]; fig. 3, 4,<br>14<br>(Family: none) | 1-7 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 November, 2009 (24.11.09) | Date of mailing of the international search report<br>01 December, 2009 (01.12.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/065685 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-102510 A  (Oki Electric Industry Co., Ltd.),<br>11 April 2000 (11.04.2000),<br>paragraphs [0039] to [0041], [0053] to [0056]; fig. 1<br>(Family: none) | 1-7 |

Form PCT/ISA/210 (continuation of second sheet) (April 2007)

**EP 2 330 582 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004041485 A